# EUROPEAN PATENT APPLICATION

(11) **EP 4 379 985 A1**
(43) Date of publication of application: **05.06.2024**
(21) Application number: 23175682.6
(22) Date of filing: 26.05.2023
(51) Int. Cl.: H02G 11/02

(54) **CHARGING PILE**

(30) Priority: 30.11.2022 CN 202223213491 U
(71) Applicant: Shenzhen Guanke Technologies Co., Ltd., Shenzhen City (CN)
(72) Inventor: LAN, Qing, Shenzhen (CN); LIU, Ligen, Shenzhen (CN); WU, Liang, Shenzhen (CN); QIU, Xuren, Shenzhen (CN); GONG, Qinwan, Shenzhen (CN); HE, Lianggang, Shenzhen (CN); LU, Junbo, Shenzhen (CN)
(74) Representative: White, Andrew John

(57) **Abstract**

The present application relates to a charging pile, comprising a shell, a turntable, at least one electric control assembly and at least one charging gun, wherein the shell encloses and forms an inner cavity, two through holes are provided along the transverse or longitudinal direction of the shell, at least part of the turntable is rotatably arranged in the inner cavity along the axial direction of the through holes, at least one accommodating space is formed inside the turntable, and the electric control assembly is arranged in the accommodating space and can rotate with the turntable; the turntable comprises a first connecting portion and a second connecting portion, wherein the first connecting portion and the second connecting portion are respectively movably connected at the corresponding shell position of the two through holes; the first connecting portion and the second connecting portion cooperate to form at least one wire winding groove for accommodating a charging wire on the charging gun. The charging pile is designed by the movable fit between the turntable and the shell, the structural connection between the first connecting portion and the second connecting portion, and the position where the electric control assembly is arranged in the accommodating space, so as to reduce the overall volume of the charging pile and meet the storage requirement of the charging wire.

## Description

### BACKGROUND

### 1. Technical Field

The present disclosure generally relates to the technical field of charging devices, and more particularly to a charging pile.

### 2. Description of Related Art

New energy vehicles are widely used because they have less environmental impact than traditional fuel vehicles. As the number of new energy vehicles increases, so does the need for charging piles for powering new energy vehicles. In the prior art, the charging pile is large and needs to be fixed in a specific place, the owner of the new energy automobile can only search for a fixed place to charge corresponding to the position of the charging pile, and the cable is exposed to the outside and easily damaged..

### SUMMARY

The object of the present disclosure is to provide a charging pile which, through simple structural cooperation, reduces the overall volume of the charging pile while satisfying the requirement for charging wire storage.

To this end, embodiments of the present disclosure provide a charging pile comprising:
a shell, wherein an inner cavity is formed by enclosing the shell, and two through holes are provided along the transverse or longitudinal direction of the shell;
a turntable, at least part of the turntable being rotatably arranged in the inner cavity along the through hole axial direction, and an accommodating space being formed inside the turntable;
at least one electric control assembly, wherein the electric control assembly is provided in the accommodating space and can rotate with the turntable;
at least one charging gun comprising a charging head and a charging wire, wherein one end of the charging wire is electrically connected to the electric control assembly, and the other end is connected to the charging head;
each turntable comprises a first connecting portion and a second connecting portion, wherein the first connecting portion and the second connecting portion are respectively movably connected at the positions of the shells corresponding to the two through holes; a wire winding groove for accommodating the charging wire is formed in cooperation with the first connecting portion and the second connecting portion..

According to the charging pile provided in the embodiment of the present application, when the user needs to charge, by directly pulling the charging wire of the charging gun outside the shell of the present charging pile, at this time, the turntable can rotate under the action of external force, so that the charging wire received in the wire winding groove can be led out, and the user can move the charging gun to the position of the charging port on the body of the new energy automobile; when the charging is completed, the charging wire exposed to the outside of the charging pile shell can be wound and received in the winding groove by merely driving the turntable to reversely rotate in the direction in which the charging wire is led out. With regard to the turntable connected to the shell, the turntable is provided as the first connecting portion and the second connecting portion which are matched, and the first connecting portion and the second connecting portion respectively achieve the matching of the rotary connection at the position corresponding to the through hole of the shell, and no additional driving device, such as electric motor, is required to drive the turntable to rotate, and an ordinary user can achieve the rotation of the turntable by acting on the turntable with his/her hands. Furthermore, the first connecting portion and the second connecting portion are opposite fitted outsidewalls in the inner cavity of the shell to form at least one wire winding groove for accommodating the charging wire, and the insidewalls enclose at least one accommodating space for mounting and fixing the electric control assembly. The charging pile is designed by the movable fit between the turntable 2 and the shell 1, the structural connection between the first connecting portion and the second connecting portion, and the position where the electric control assembly is provided in the accommodating space, so that the overall volume of the charging pile is reduced while satisfying the storage requirement of the charging wire.

### BRIEF DESCRIPTION OF THE DRAWINGS

In order to explain the embodiments of the present application or the technical solutions in the prior art more clearly, the following briefly introduces the embodiments or the drawings required to be used in the description of the prior art; obviously, the drawings in the description below are some embodiments of the present application, and it would have been obvious for a person of ordinary skill in the art to obtain other drawings according to these drawings without involving any inventive effort. Moreover, in the drawings, like parts bear like reference numerals and are not drawn to scale.
FIG. 1 shows a schematic view showing the overall structure of a charging pile according to the embodiment of the present application;
FIG. 2 shows a cross-sectional view of a charging pile provided by an embodiment of the present application;
FIG. 3 shows an enlarged view of a portion of FIG. 2;
FIG. 4 shows an exploded view of the turntable in a charging pile according to an embodiment of the present application, wherein the direction indicated by arrow is the axial direction;
FIG. 5 shows a partial explosion diagram of a charging pile provided by an embodiment of the present application, wherein the direction indicated by the arrow is the axial direction;

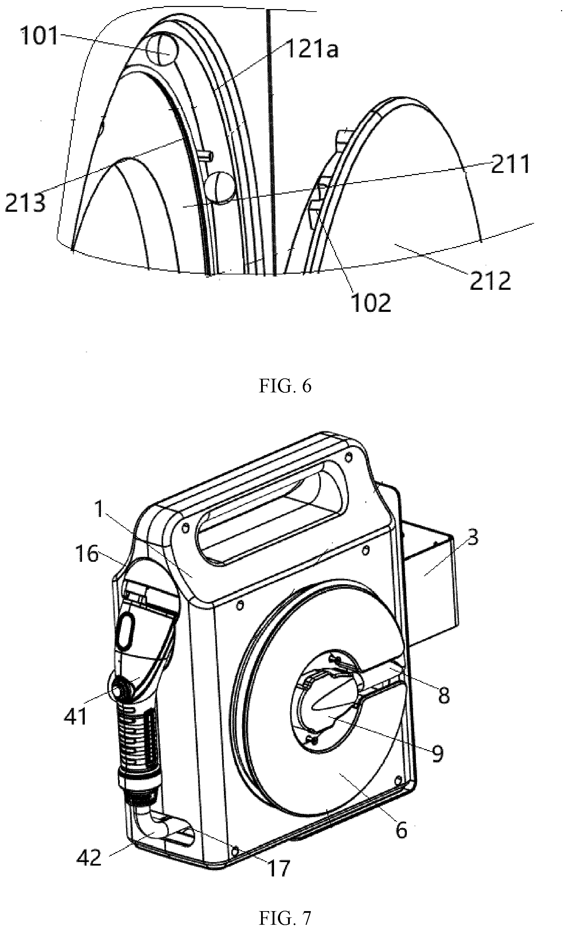

FIG. 6 shows an enlarged view of a portion of FIG. 5;
FIG. 7 is a schematic view showing an overall structure of another direction of a charging pile according to an embodiment of the present application;
FIG. 8 shows another partial exploded view of a charging pile provided by an embodiment of the present application;
FIG. 9 shows an enlarged partial view of FIG. 8.

### Description of Reference Numerals

1-shell,
11- handle portion,
12- first shell, 121-first sidewall, 121a-first flange,
13- second shell, 131-second sidewall, 131a-second flange,
14- inner cavity, 15-through hole, 16-charging-slot, 17-outlet, 18-rotary drum,
2-turntable,
21- first connecting portion, 211-first connector, 211a-annular wall, 212-first end plate, 212a-rotating handle, 213- clip, 214-buckle groove, 215-screw holes,
22-second connecting portion, 221-second connector, 222-second end plate, 23-winding groove, 24-accommodating space,
3-mounting element, 31-mounting block ,32-connecting block,
4-charging gun, 41-charging head, 42-charging wire,
5-electric control assembly, 51-display screen, 52-button,
6-storage tray, 61-storage space, 62-slot,
7-clearance, 8-cable, 9-plug,
10-rotating element, 101 -ball, 102-ball groove.

### DESCRIPTION OF EMBODIMENTS

In order that the objects, aspects and advantages of the embodiments of the present invention will become more apparent, a more complete description of the embodiments of the present invention will be rendered by reference to the appended drawings, which are provided for purposes of illustration only and are not intended to be exhaustive or limiting of the present invention. Based on the embodiments in the present application, all the other embodiments obtained by a person of ordinary skill in the art without involving any inventive effort fall within the scope of protection of the present application.

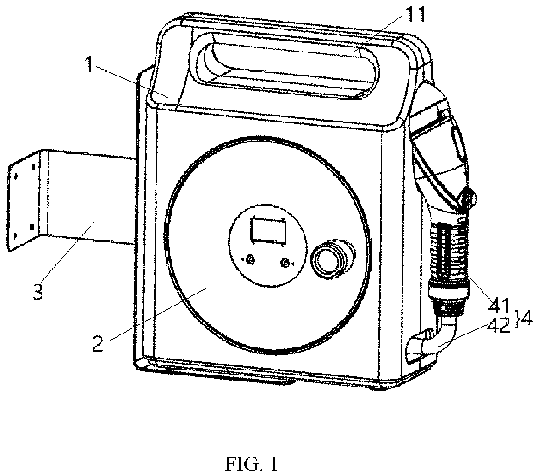

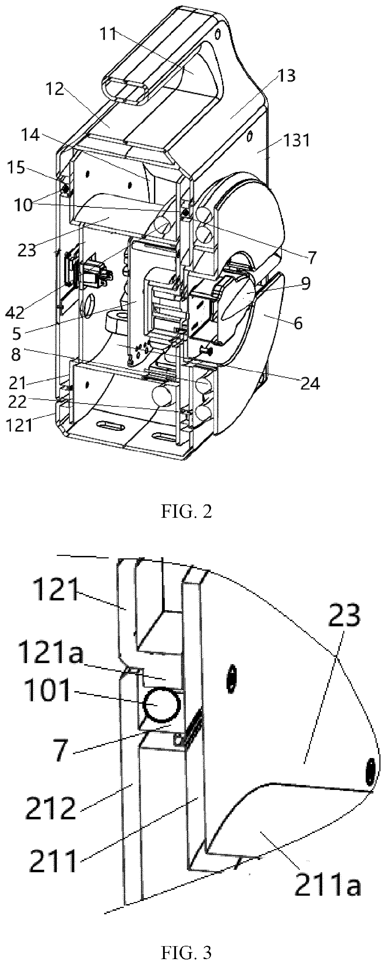

FIG. 1 is a schematic view showing the overall structure of a charging pile according to an embodiment of the present application. FIG. 2 shows a cross-sectional view of a charging pile provided by an embodiment of the present application.

Referring to FIG. 1 and 2, embodiments of the present application provide a charging pile for powering new energy vehicles. The charging pile comprises a shell 1, wherein the shell 1 encloses and forms at least one inner cavity 14, and two through holes 15 are provided along the transverse or longitudinal direction of the shell 1; a turntable 2, wherein at least part of the turntable 2 is rotatably arranged in the inner cavity 14 along the axial direction of the through hole 15, and at least one accommodating space 24 is formed inside the turntable 2; at least one electric control assembly 5, wherein the electric control assembly 5 is provided in the accommodating space 24 and can rotate with the turntable 2; the charging gun 4 comprises a charging head 41 and a charging wire 42, wherein one end of the charging wire 42 is electrically connected to the electric control assembly 5, and the other end thereof is connected to the charging head 41. The turntable 2 comprises a first connecting portion 21 and a second connecting portion 22, wherein the first connecting portion 21 and the second connecting portion 22 are respectively movably connected at the position of the shell 1 corresponding to the two through holes 15; the first connecting portion 21 and the second connecting portion 22 are fitted with a wire winding groove 23 for accommodating the charging wire 42.

When a user needs to charge, the present charging pile is externally connected to mains electricity, and then the charging wire 42 of the charging gun 4 is pulled outwards, at this moment, the turntable 2 rotates clockwise or counterclockwise under the action of an external force, so that the charging wire 42 received in the wire winding groove 23 can be smoothly led out, and the user can drive the charging gun 4 to move to a charging port position where a new energy automobile is located for charging, and in this process, mains electricity such as 220V alternating current is led to the electric control assembly 5, and the electric control assembly 5 converts the 220V mains electricity into direct current adapted to the new energy automobile. The direct current transmits electrical energy to the new energy vehicle to be charged through the charging gun 4. When the charging is completed, the charging wire 42 exposed to the outside of the charging pile shell 1 can be re-wound and received in the winding groove 23 by simply driving the turntable 2 to rotate in a reverse direction when the turntable 2 is pulled out toward the charging wire 42 by hand. With regard to the turntable 2 connected to the shell 1, the turntable 2 is provided as the first connecting portion 21 and the second connecting portion 22 which are oppositely matched, wherein the first connecting portion 21 and the second connecting portion 22 respectively achieve a rotary connection with the shell 1 at the positions of the through holes 15 on opposite sides of the shell 1, and no additional driving device (such as an electric motor) is required to drive the turntable 2 to rotate, and an ordinary user can achieve the rotation of the turntable 2 relative to the shell 1 by acting on the turntable 2 with his/her hands so as to complete the storage of the charging wire 42. Furthermore, the outer sidewall of the first connecting portion 21 and the second connecting portion 22 which are fitted in the inner cavity 14 forms at least one wire winding groove 23 for accommodating the charging wire 42, and the inner sidewall encloses at least one accommodating space 24 for mounting and fixing the electric control assembly 5. The charging pile is designed by the movable fit between the turntable 2 and the shell 1, the structural connection between the first connecting portion 21 and the second connecting portion 22, and the position where the electric control assembly 5 is provided in the accommodating space 24, so as to reduce the overall volume of the charging pile and meet the storage requirement of the charging wire 42.

In an alternative embodiment, referring to FIG.s 3 to 6, the first connecting portion 21 comprises a first connector 211 and a first end plate 212, and the second connecting portion 22 comprises a second connector 221 and a second end plate 222; the shell 1 comprises at least one first sidewall 121 and at least one second sidewall 131 which are penetrated by the through hole 15, the first connector 211 is arranged on the inner cavity 14 near the first sidewall 121, and the first end plate 212 is arranged outside the inner cavity 14 near the first sidewall 121; the second connector 221 is disposed within the inner cavity 14 adjacent to the second sidewall 131, and the second end plate 222 is disposed outside the inner cavity 14 adjacent to the second sidewall 131.

The movable connection of the connecting portion with the shell 1 is achieved by the cooperation of connecting members and end plates respectively provided on both sides of the sidewall in the axial direction H, without the need for additional auxiliary driving members to drive the rotation of the turntable 2. Connectors and end plates respectively provided on the inner and outer sides of the inner cavity 14 can facilitate assembly. The first end plate 212 vertically extends out of the annular extension piece towards the first connector 211, at least one buckle groove 214 is provided at the end of the extension piece, the first connector 211 is correspondingly provided with at least one clip 213 at the position of the annular buckle groove 214, the first connector 211 and the first end plate 212 complete a snap connection with the buckle groove 214 via the clip 213, and the first sidewall 121 and the extension piece are movably fitted with each other. It is of course also possible that the first connector 211 extends perpendicularly out of the annular extension toward the first end plate 212. On the other side of the shell 1, the second connecting member 221 and the second end plate 222 are connected in the same manner as the first connector 211 and the first end plate 212 described above. One of the connector and the end plate is provided with a clip 213, and the other is provided with at least one buckle groove 214, wherein the clip 213 and the buckle groove 214 are snap-engaged so as to detachably connect the two. However, in order to improve the strength of the connection between the two, the end plate may be provided with an annularly arranged screw holes 215, and the two may be detachably connected through the cooperation of screws and the screw holes 215.

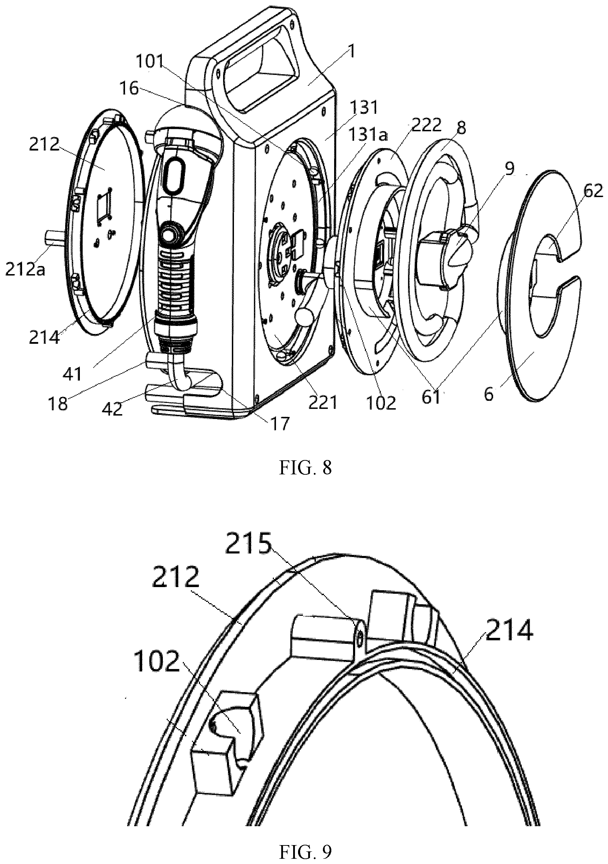

Specifically, referring to FIG. 3, a first flange 121a and a second flange 131a in the shape of circular ring are vertically extended along the center line of the through hole 15 from the inner sides of the sidewalls. The first end plate 212 is provided at the through hole 15 of the first sidewall 121 and the outer side surface of the first end plate 212 and the outer side surface of the first sidewall 121 are substantially horizontal, and the second end plate 222 is provided at the through hole 15 of the second sidewall 131 and the outer side surface of the second end plate 222 and the outer side surface of the first sidewall 121 are substantially horizontal; the first flange 121a limits movement of the first end plate 212 toward the inner cavity 14 and the second flange 131a limits movement of the second end plate 222 toward the inner cavity14. A protruding flange structure is provided at the positions of the two sidewalls corresponding to the through holes 15, respectively, so that when the connector is engaged with the end plate, the flange can abut against the end plate for limiting the movement of the end plate into the inner cavity 14. And referring to FIG. 8 and 9, the connection point of the first connector 211 and the first end plate 212 is in a clearance fit with the first flange 121a, the connection point of the second connector 221 and the second end plate 222 is in clearance fit with the second flange 131a, and at least one rotating element 10 for facilitating the rotation of the turntable 2 is provided in the clearance 7.

When the turntable 2 is rotated, the sidewall on the circumferential side of the through hole 15 restricts the first end plate 212 and the second end plate 222 from moving in any direction as much as possible. In the first connecting portion 21, numerous connecting points enclose an extending piece in the shape of a ring, at least one clearance 7 is formed between the extending piece and the first flange 121a, an upper portion of the rotating element 10 provided in the clearance 7 abuts against the first flange 121a, and the lower portion abuts against the extending piece, so that there is a position restriction between the first sidewall 121 and the first connecting portion 21 and the first connecting portion 21 can rotate relative to the first sidewall 121. The first connecting portion 21 is circular, and the diameter thereof is greater than the diameter of the through hole 15, and is adhered to the inner side of the first sidewall 121; the first end plate 212 is also circular, and the diameter thereof is slightly less than the diameter of the through hole 15; the first flange 121a limits the first end plate 212 to move towards the inner cavity 14; and the snap connection between the first end plate 212 and the first connector 211 limits the first end plate 212 to move away from the first connector 211 in a direction away from the inner cavity 14. Of course, the engagement relationship between the second connecting portion 22 and the second sidewall 131 is the same as the engagement relationship between the first connecting portion 22 and the first sidewall 121.

Of course, it is also possible to increase the diameter of the through hole 15 of the outer ring by removing the outer ring of the sidewall of the peripheral side of the through hole 15 at the position of the original through hole 15, while keeping the diameter of the inner ring of the through hole 15 (the side close to the inner cavity 14) constant, so that the first end plate 212 and the second end plate 222 can be limited to the outer ring position of the through hole 15 outside the inner cavity 14.

The outer surface of the end panel and the outer surface of the sidewall are substantially horizontal, i.e. substantially coplanar, ensuring the aesthetics and integrity of the overall appearance.

Alternatively, the rotating element 10 is a plurality of balls 101 arranged at intervals in the clearance 7, and the first end plate 212 and/or the second end plate 222 are provided with a plurality of ball grooves 102 on the peripheral side corresponding to the balls 101. The ball grooves 102 serve to restrain the balls 101 so as to prevent the balls 101 from moving out of the predetermined trajectory, and also to prevent the balls 101 from gathering locally to affect the rotation of the turntable 2. It is to be understood that the rotating element 10 may be provided in other structures capable of realizing the rotation of the turntable 2 with respect to the shell 1, and is not specifically limited herein.

The shell 1 provided therein may be integrally formed, or may comprise at least one first shell 12 and at least one second shell 13 which are detachably connected, wherein the first shell 12 is provided with at least one first sidewall 121, and the second shell 13 is provided with at least one second sidewall 131, so as to facilitate the processing and assembly of the turntable 2 of the inner cavity 14 of the shell 1. However, with regard to the specific detachable connection form of the first shell 12 and the second shell 13, in the present embodiment, in order to ensure the stability of the overall structure, the first shell 12 and the second shell 13 are fixed by means of screws, which is also very convenient when being replaced.

Optionally, the first connecting portion 21 further comprises at least one annular wall 211a arranged on the peripheral side of the central point of the first connector 211, the annular wall 211a extending perpendicularly with respect to the first connector 211, and the second connecting portion 22 further comprises the annular wall 211a arranged on the peripheral side of the central point of the second connecting member 221, the annular wall 211a extending perpendicularly with respect to the second connecting member 221; the two annular walls 211a are oppositely arranged to enclose the accommodating space 24, and the first connector 211, the second connector 221 and the two annular walls 211a together define the winding groove 23 at the outer ring of the accommodating space 24.

The sectional shape of the annular wall 211a may be circular, square, rectangular, triangular or other irregular shape, and the shape and size of the annular wall 211a may be appropriately selected according to the size and shape of the internal electric control assembly 5. In the present embodiment, it is preferable that the annular wall 211a has a circular cross section, and it is convenient to provide a snap-fit structure for the circular annular wall 211a, and the outer side of the annular wall 211a serves as the inner core of the accommodating space 24, and when the two annular walls 211a are fitted together, the cylindrical annular wall 211a is convenient to be accommodated and labor-saving.

In the accommodating space 24, the electric control assembly 5 is fixed in the accommodating space 24 so as to rotate synchronously with the turntable 2 by providing at least one fixing column at the periphery side of the electric control assembly 5, and it is also possible to avoid knocking on the electric control assembly 5 during rotation and influence on line winding.

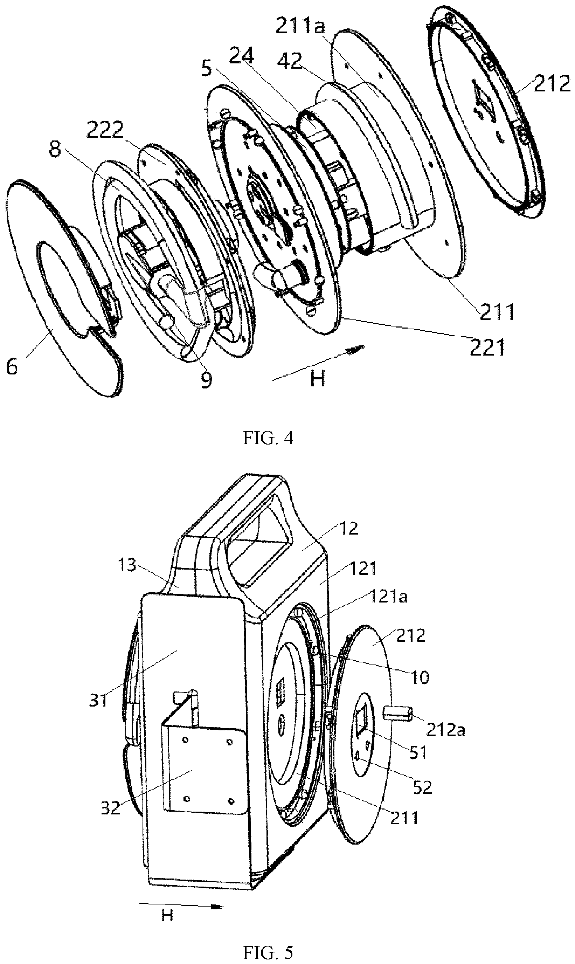

In an alternative embodiment, referring to FIG. 5, the charging pile further comprises a control panel disposed on the outer surface of the first end plate 212 and electrically connected to the electric control assembly 5; the control panel is synchronously rotatable with the first end plate 212, and includes at least one display screen 51 and buttons 52. The button 52 is touch control button, and can adjust the prompt of reserved charging and blinking charging color, and the display screen 51 can display the charging current magnitude, such as 32A, 40A, etc. and the charging duration. The reserved charging method is to start the charging after half an hour or two hours after connecting the mains power supply and the charging port of the new energy automobile.

Optionally, a rotating handle 212a is attached perpendicularly to the outer surface of the first end plate 212, and the rotating handle 212a is disposed near the outer edge of the first end plate 212. The rotating handle 212a is provided so that a user can manually rotate the rotating handle 212a to achieve the rotation of the turntable 2 after using the charging pile to charge, so that the charging wire 42 can be recycled into the wire winding groove 23; the rotating handle 212a is provided away from the central point to increase the distance between the connecting line between the rotating handle 212a and the central point; and the torque is increased so as to achieve the purpose of saving effort and facilitating user operation.

Optionally, at least one outlet 17 is provided at either side away from the through hole 15 of the shell 1,a charging wire 42 pass through the outlet,, two opposite rotary drums 18 are provided at the line outlet 17, the charging wire 42 extends from between the two rotary drums 18, and at least one rotary drum 18 rotates as the charging wire 42 extends; the shell 1 is provided with at least one charging-slot 16 for placing a charging head 41, and the charging-slot 16 is provided above the outlet 17. In the non-use state, charging head 41 is engaged in charging-slot 16, and charging wire 42 is accommodated in winding groove 23. When charging is required, the user simply removes the charging head 41 and moves the charging head 41 so that the charging wire 42 is in tension. Under the action of a pulling force, the turntable 2 is driven to rotate relative to the shell 1, so that the charging wire 42 is led out of the wire winding groove 23. At the same time, the rotary drum 18 rotates as the charging wire 42 is extended, and the rotary drum 18 allows the charging wire 42 to be pulled out more smoothly and avoids damage to the charging wire due to friction with the outlet 17.

In an alternative embodiment, reference to FIG. 2, at least one handle portion 11 is provided above the shell 1, the handle portion 11 being fixedly connected to the shell 1 or being of one-piece construction with the shell 1. It can be moved to any position for charging according to the user's requirements.

In an alternative embodiment, reference to FIG. 5, the shell 1 is provided outside with at least one mounting element 3 comprising at least one mounting block 31 fixedly connected to the shell 1, and at least one connecting block 32 hinged to the mounting block 31. It will be appreciated that the mounting block 31 may be a planar sheet-like structure to be provided on only one sidewall of the shell 1, or an L-shaped structure to be secured to the sidewall and the bottom wall of the shell 1, respectively, to provide structural stability of the fixed connection, and that the connecting block 32 may be used to be secured to a stanchion or a wall without the need to move the charging pile, the mounting block 31 being hinged to the connecting block 32 to enable the position and angle of the charging pile to be suitably adjusted in a fixed condition to maximise docking with a new energy vehicle.

In an alternative embodiment, with reference to FIG.s 7-9, at least one storage tray 6 is fixedly connected to the outer side of the second end plate 222, at least one storage space 61 is provided between the storage tray 6 and the outer side of the second end plate 222, and the storage tray 6 can rotate synchronously with the second end plate 222. Wherein a cable 8 electrically connected to the electric control assembly 5 is provided near the storage tray 6, and the cable 8 is used for connecting an external power supply to supply power to the charging pile; the cable 8 is accommodated in the storage space 61, and a slot 62 for accommodating the plug 9 of the cable 8 is provided at the intermediate position of the storage tray 6. The cable 8 can be received by the storage tray 6, so that the charging pile can be moved to any position close to the power source, and then the received cable 8 can be taken out, so that the plug 9 and the power source can be electrified.

Finally, it should be noted that: the above-mentioned embodiments are merely illustrative of the technical solution of the present application, rather than limiting same; although the present application has been described in detail with reference to the foregoing embodiments, those skilled in the art will appreciate that: the technical solutions disclosed in the above-mentioned embodiments can still be amended, or some or all of the technical features thereof can be replaced by equivalents; however, these modifications or substitutions do not bring the essence of the corresponding technical solutions out of the scope of the technical solutions of the various embodiments of the present application.

## Claims

1. A charging pile, comprising:
a shell, wherein an inner cavity is formed by enclosing the shell, and two through holes are provided along the transverse or longitudinal direction of the shell;
a turntable, at least part of the turntable being rotatably arranged in the inner cavity along the through hole axial direction, and an accommodating space being formed inside the turntable;
at least one electric control assembly, wherein the electric control assembly is provided in the accommodating space and can rotate with the turntable;
at least one charging gun comprising a charging head and a charging wire, wherein one end of the charging wire is electrically connected to the electric control assembly, and the other end is connected to the charging head;
the turntable comprises a first connecting portion and a second connecting portion, wherein the first connecting portion and the second connecting portion are respectively movably connected at the positions of the shells corresponding to the two through holes; a wire winding groove for accommodating the charging wire is formed in cooperation with the first connecting portion and the second connecting portion.

2. The charging pile according to claim 1, wherein the first connecting portion comprises a first connector and a first end plate, and the second connecting portion comprises a second connector and a second end plate;
the shell includes a first sidewall and a second sidewall that are penetrated by the through hole, the first connector is disposed in the inner cavity near the first sidewall, and the first end plate is disposed outside the inner cavity near the first sidewall; the second connector is disposed in the inner cavity proximate to the second sidewall and the second end plate is disposed outside the inner cavity proximate to the second sidewall.

3. The charging pile according to claim 2, wherein the first connecting portion further comprises an annular wall provided on the center point peripheral side of the first connector, the annular wall extending vertically with respect to the first connector, and the second connecting portion further comprises an annular wall provided on the center point peripheral side of the second connector, the annular wall extending vertically with respect to the second connecting member;
the two annular walls are oppositely arranged to enclose the accommodating space, and the first connector, the second connector and the outer ring of the two annular walls in the accommodating space together define the wire winding groove.

4. The charging pile according to claim 3, wherein a first flange and a second flange in the shape of a circular ring are vertically extended along the center line of the through hole on the inner side of both the sidewalls;
the first end plate is provided at the through hole of the first sidewall and the outer side surface of the first end plate and the outer side surface of the first sidewall are substantially horizontal, and the second end plate is provided at the through hole of the second sidewall and the outer side surface of the second end plate and the outer side surface of the first sidewall are substantially horizontal;
the first flange limits movement of the first end plate toward the inner cavity and the second flange limits movement of the second end plate toward the inner cavity.

5. The charging pile according to claim 4, wherein at least one connection point of the first connector and the first end plate is in a clearance fit with the first flange, at least one connection point of the second connector and the second end plate is in a clearance fit with the second flange, and at least one rotating element for facilitating rotation of the turntable is provided in the clearance.

6. The charging pile according to claim 5, wherein the rotating element is a plurality of balls arranged at intervals in the clearance, and the first end plate and/or the second end plate is provided with a plurality of ball grooves corresponding to the balls on their circumferential side thereof.

7. The charging pile according to claim 2, wherein further comprising a control panel disposed on the outer surface of the first end plate and electrically connected to the electric control assembly;
the control panel is synchronously rotatable with the first end plate, the control panel including at least one display screen and buttons.

8. The charging pile according to any one of claims 2-7, wherein that a rotating handle is vertically connected to the outer surface of the first end plate, the rotating handle being arranged near the outer edge of the first end plate; and/or, an outlet is provided at either side away from the through hole of the shell, the charging wire pass through the outlet, two opposite rotary drums are provided at the line outlet, the charging wire protrudes from between the two rotary drums, and at least one of the rotary drums rotates as the charging wire protrudes; the shell is provided with at least one charging-slot for placing the charging head, and the charging-slot is provided above the outlet; and/or,
at least one handle portion is provided above the shell, the handle portion is fixedly connected to the shell or the handle portion and the shell are of an integral structure; and/or,
at least one mounting element is provided outside the shell and includes at least one mounting block fixedly connected to the shell and at least one connecting block hinged to the mounting block.

9. The charging pile according to any one of claims 2-7, wherein at least one storage tray is fixedly connected to the outer side of the second end plate, wherein at least one storage space is provided between the storage tray and the outer side of the second end plate, and wherein the storage tray can rotate synchronously with the second end plate.

10. The charging pile according to claim 9, wherein a cable electrically connected to the electric control assembly is provided near the storage tray, the cable being used for connecting external power supply to power the charging pile;
the cable is accommodated in the storage space, and a slot for accommodating a plug of the cable is provided at the intermediate position of the storage tray.

## Amended claims

### Amended claims in accordance with Rule 137(2) EPC.

1. A charging pile, comprising:
a shell (1), wherein an inner cavity (14) is formed by enclosing the shell (1), and two through holes (15) are provided along the transverse or longitudinal direction of the shell (1);
a turntable (2), at least part of the turntable (2) being rotatably arranged in the inner cavity (14) along the through hole axial direction, and an accommodating space being formed inside the turntable (2);
at least one electric control assembly (5), wherein the electric control assembly (5) is provided in the accommodating space and can rotate with the turntable (2);
at least one charging gun (4) comprising a charging head (41) and a charging wire (42), wherein one end of the charging wire (42) is electrically connected to the electric control assembly (5), and the other end is connected to the charging head (41);
the turntable (2) comprises a first connecting portion (21) and a second connecting portion (22), wherein the first connecting portion (21) and the second connecting portion (22) are respectively movably connected at the positions of the shells (1) corresponding to the two through holes (15); a wire winding groove for accommodating the charging wire (42) is formed in cooperation with the first connecting portion (21) and the second connecting portion (22); wherein the first connecting portion (21) comprises a first connector (211) and a first end plate (212), and the second connecting portion (22) comprises a second connector (221) and a second end plate (222).

2. The charging pile according to claim 1, wherein the shell (1) includes a first sidewall (121) and a second sidewall (131) that are penetrated by the through hole (15), the first connector (211) is disposed in the inner cavity (14) near the first sidewall (121), and the first end plate (212) is disposed outside the inner cavity (14) near the first sidewall (121); the second connector (221) is disposed in the inner cavity (14) proximate to the second sidewall (131) and the second end plate (222) is disposed outside the inner cavity (14) proximate to the second sidewall (131).

3. The charging pile according to claim 2, wherein the first connecting portion (21) further comprises an annular wall (211a) provided on the center point peripheral side of the first connector (211), the annular wall (211a) extending vertically with respect to the first connector (211), and the second connecting portion (22) further comprises an annular wall (211a) provided on the center point peripheral side of the second connector (221), the annular wall (211a) extending vertically with respect to the second connecting member;
the two annular walls (211a) are oppositely arranged to enclose the accommodating space, and the first connector (211), the second connector (221) and the outer ring of the two annular walls (211a) in the accommodating space together define the wire winding groove.

4. The charging pile according to claim 3, wherein a first flange and a second flange in the shape of a circular ring are vertically extended along the center line of the through hole (15) on the inner side of both the sidewalls;
the first end plate (212) is provided at the through hole (15) of the first sidewall (121) and the outer side surface of the first end plate (212) and the outer side surface of the first sidewall (121) are horizontal, and the second end plate (222) is provided at the through hole (15) of the second sidewall and the outer side surface of the second end plate (222) and the outer side surface of the first sidewall (121) are horizontal;
the first flange limits movement of the first end plate (212) toward the inner cavity (14) and the second flange limits movement of the second end plate (222) toward the inner cavity (14).

5. The charging pile according to claim 4, wherein at least one connection point of the first connector (211) and the first end plate (212) is in a clearance fit with the first flange, at least one connection point of the second connector (221) and the second end plate (222) is in a clearance fit with the second flange, and at least one rotating element for facilitating rotation of the turntable (2) is provided in the clearance.

6. The charging pile according to claim 5, wherein the rotating element is a plurality of balls arranged at intervals in the clearance, and the first end plate (212) and/or the second end plate (222) is provided with a plurality of ball grooves corresponding to the balls on their circumferential side thereof.

7. The charging pile according to claim 2, wherein further comprising a control panel disposed on the outer surface of the first end plate (212) and electrically connected to the electric control assembly (5);
the control panel is synchronously rotatable with the first end plate (212), the control panel including at least one display screen and buttons.

8. The charging pile according to any one of claims 2-7, wherein that a rotating handle is vertically connected to the outer surface of the first end plate (212), the rotating handle being arranged near the outer edge of the first end plate (212); and/or,
an outlet is provided at either side away from the through hole (15) of the shell (1), the charging wire (42) pass through the outlet, two opposite rotary drums are provided at the line outlet, the charging wire (42) protrudes from between the two rotary drums, and at least one of the rotary drums rotates as the charging wire (42) protrudes; the shell (1) is provided with at least one charging-slot (16) for placing the charging head (41), and the charging-slot (16) is provided above the outlet; and/or,
at least one handle portion is provided above the shell (1), the handle portion is fixedly connected to the shell (1) or the handle portion and the shell (1) are of an integral structure; and/or,
at least one mounting element (3) is provided outside the shell (1) and includes at least one mounting block fixedly connected to the shell (1) and at least one connecting block hinged to the mounting block.

9. The charging pile according to any one of claims 2-7, wherein at least one storage tray is fixedly connected to the outer side of the second end plate (222), wherein at least one storage space is provided between the storage tray and the outer side of the second end plate (222), and wherein the storage tray can rotate synchronously with the second end plate (222).

10. The charging pile according to claim 9, wherein a cable electrically connected to the electric control assembly (5) is provided near the storage tray, the cable being used for connecting external power supply to power the charging pile;
the cable is accommodated in the storage space, and a slot for accommodating a plug of the cable is provided at the intermediate position of the storage tray.
